# FASCICULE DE BREVET EUROPEEN

(11) **EP 1 956 454 B1**
(45) Date de publication et mention de la délivrance du brevet: **12.01.2011**
(21) Numéro de dépôt: 08101102.5
(22) Date de dépôt: 30.01.2008
(51) Int. Cl.: G05B 19/19, H02P 5/46, B41F 13/004, B41F 33/00

(54) **Ensemble pour presse rotative**
Vorrichtung für eine Rundlaufpresse
Device for a rotary press

(30) Priorité: 31.01.2007 FR 0700681
(43) Date de publication de la demande: 13.08.2008
(73) Titulaire: Goss International Montataire S.A., 60160 Montataire (FR)
(72) Inventeur: Colin, Alain, 60260 Lamorlaye (FR); Caulier, Yves, 60160 Montataire (FR); Lebeuf, Emmanuel, 60700 Pont Sainte Maxence (FR); Vidaillac, François, 60000 Frocourt (FR)
(74) Mandataire: Domenego, Bertrand

(56) Documents cités:
- WO-A-2005/080081
- DE-C1- 19 727 824
- DE-U1- 8 314 827

## Description

La présente invention concerne un ensemble de dispositif de contrôle d'une presse rotative, du type indiqué dans le préambule de la revendication 1. Un tel dispositif est connu de DE 197 27 824.

On connaît du document WO 2005/08 0081 un élément rotatif pour une presse d'impression qui est munie d'un encodeur. L'encodeur est adapté pour générer un premier signal périodique lors de la rotation de l'élément rotatif. L'encodeur est relié à une unité d'évaluation qui comporte au moins un synthétiseur pour la génération d'un second signal périodique ayant un rapport de résolution, de fréquence ou de phase par rapport au premier signal.

Dans le cas de cet élément rotatif, l'encodeur est un encodeur physique qui est constitué par exemple d'un disque d'encodeur et d'un capteur d'encodeur. Le capteur d'encodeur génère en fonction de la rotation du disque d'encodeur le premier signal périodique.

L'inconvénient de cet élément rotatif consiste dans le fait que les variations de vitesse de l'élément sont propagées à l'unité d'évaluation et influencent d'une manière néfaste le signal de sortie généré par l'unité d'évaluation.

L'invention a pour but de pallier ces inconvénients et de proposer un dispositif de commande d'une presse rotative qui permette une augmentation de la précision de la commande.

A cet effet, l'invention a pour objet un ensemble de dispositif de contrôle du type indiqué, **caractérisé en ce qu**'il comprend les caractéristiques de la revendication 1.

Selon des modes particuliers de réalisation, l'invention comporte l'une ou plusieurs des caractéristiques indiquées dans les revendications dépendantes

L'invention sera mieux comprise à la lecture de la description qui va suivre, donnée uniquement à titre d'exemple et faite en se référant aux dessins annexés, sur lesquels :
- la Figure 1 est une vue schématique d'une presse d'impression selon l'invention ;
- la Figure 2 est une vue schématique d'une unité d'évaluation selon l'invention.

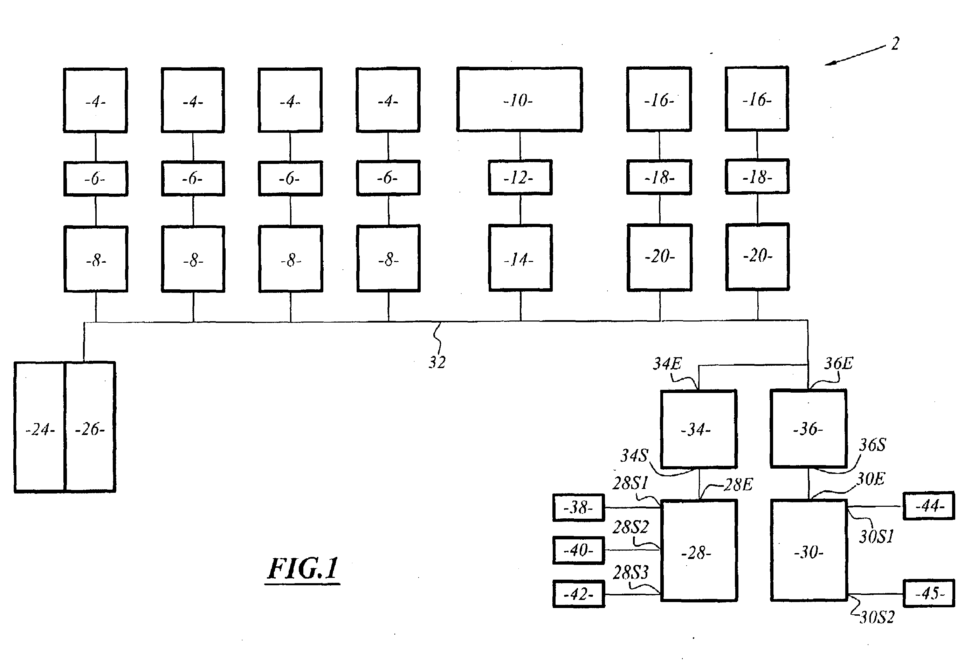

Sur la Figure 1 est représentée schématiquement une presse d'impression rotative, désignée par la référence générale 2.

Cette presse d'impression 2 comporte quatre unités d'impression 4, dont chacune est entraînée par un moteur 6. Chaque moteur 6 est commandé par un convertisseur 8 d'impression, qui est soit un convertisseur de fréquence, soit un convertisseur de tension.

La presse d'impression 2 est en outre munie d'un sécheur 10 entraîné par un moteur 12 et commandé par un convertisseur 14 de sécheur. Ce convertisseur de sécheur 14 est également un convertisseur de fréquence soit un convertisseur de tension.

La presse d'impression 2 est aussi munie de deux plieuses 16 dont chacune est entraînée par un moteur 18 qui est commandé par un convertisseur de plieuse 20.

La presse d'impression 2 comprend en outre une unité de commande qui est constituée d'un ordinateur logique programmable OLP 24 et d'un module de modulateur de fréquence 26.

Ce module de modulateur de fréquence 26 est adapté pour générer un signal maître qui représente une grandeur de consigne, telle que la position absolue des éléments rotatifs de la presse, la vitesse de rotation des éléments rotatifs ou un incrément de position des éléments rotatifs. Le signal maître est émis sous forme d'un signal périodique ayant une fréquence et une amplitude données. Le signal maître est de préférence un signal numérique.

Le signal maître est adressé à chacun des éléments de la rotative devant tourner de manière synchrone. A cet effet, chaque module possède une adresse précise à laquelle est envoyé le signal maître.

Par ailleurs, la presse d'impression 2 est munie d'une unité d'évaluation principale 28 et d'une unité d'évaluation auxiliaire 30. Ces deux unités d'évaluation principale et auxiliaire 30 sont formées par deux cartes de distribution distinctes.

Les convertisseurs 8, 14, 20 ainsi que le modulateur de fréquence 26 sont reliés à un bus 32 constituant un réseau.

L'unité d'évaluation principale 28 est reliée au bus 32 au moyen d'un encodeur virtuel principal 34 et l'unité d'évaluation auxiliaire 30 est reliée au bus 32 au moyen d'un encodeur virtuel auxiliaire 36.

Chacun des encodeurs virtuels 34, 36 comprend une entrée de signal 34E, 36E et une sortie de signal 34S, 36S. L'encodeur virtuel principal 34 est adapté pour générer un signal périodique ayant une fréquence et une phase données en fonction du signal périodique maître émis par le modulateur 26. L'encodeur virtuel principal 34 est adapté pour envoyer ce signal périodique généré en tant que signal d'entrée principal à l'unité d'évaluation 28 principale.

L'encodeur virtuel auxiliaire 36 est adapté pour générer un signal périodique ayant une fréquence et une phase données en fonction du même signal périodique maître émis par le modulateur 26 et est adapté pour envoyer ce signal périodique en tant que signal d'entrée auxiliaire à l'unité d'évaluation 30 auxiliaire.

Il est à noter que le signal périodique généré par les encodeurs virtuels 34 et 36 est identique à un signal généré par un encodeur physique qui relève la rotation d'un élément de la presse d'impression.

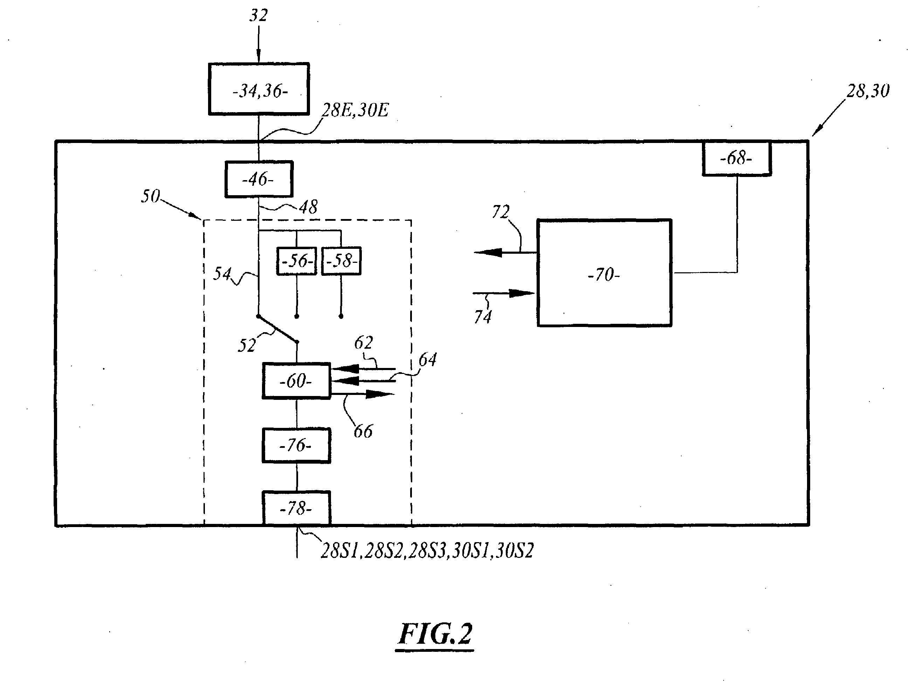

La Figure 2 représente d'une manière schématique l'unité d'évaluation 28 ou 30 selon un mode préféré de l'invention. L'unité d'évaluation principale 28 et l'unité d'évaluation auxiliaire 30 sont de conception identique. En conséquence, leurs caractéristiques sont expliquées à l'aide d'un schéma unique. L'unité d'évaluation 28, 30 comporte une entrée de signal 28E, 30E.

L'unité d'évaluation principale 28 est munie par exemple de trois sorties de signal 28S1, 28S2, 28S3. Chaque unité peut être munie de 10 sorties de signal. L'unité d'évaluation auxiliaire 30 est munie par exemple de deux sorties de signal 30S1, 30S2.

Le signal périodique envoyé par l'encodeur 34, 36 arrive à l'entrée de signal associée 28E, 30E par exemple dans un décodeur à quatre phases 46, de telle sorte que le signal décodé est envoyé sur une ligne de signal interne 48.

La ligne de signal interne 48 bifurque en un nombre d'unités fonctionnelles 50 identiques. Le nombre de ces unités fonctionnelles 50 correspond au nombre des sorties de signal disponibles sur l'unité d'évaluation 28, 30. Pour des raisons de simplicité, uniquement une seule unité fonctionnelle 50 est montrée sur la Figure 2. Dans le cas présent, l'unité d'évaluation principale 28 comporte trois de telles unités fonctionnelles 50. Chacune des unités fonctionnelles 50 est reliée à l'une des sorties de signal 28S1, 28S2 et 28S3 associée. L'unité d'évaluation auxiliaire 30 comporte deux unités fonctionnelles 50 dont chacune est reliée à l'une des sorties de signal 30S1, 30S2.

L'unité fonctionnelle 50 comprend un commutateur 52 qui permet de commuter entre une ligne directe 54, un premier dispositif de division 56 adapté pour diviser par un facteur 2 et un second dispositif de division 58 adapté pour diviser par un facteur 4. Le signal décodé et éventuellement divisé est envoyé à un synthétiseur 60 de sorte qu'en fonction de la fréquence et/ou la phase du signal périodique envoyé par l'encodeur virtuel 34, 36, le synthétiseur 60 génère un deuxième signal périodique ayant un rapport de résolution, un rapport de fréquence et un rapport de phase spécifiques par rapport au signal périodique de l'encodeur 34. L'information concernant la résolution désirée 62 et/ou le décalage de phase désiré 64 entre le signal périodique et la deuxième signal périodique est entrée dans le synthétiseur 60 par des entrées correspondantes. La position 66 du deuxième signal périodique, par exemple le décalage de phase, est mise à disposition par le synthétiseur 60 pour des raisons de surveillance.

Les paramètres 62, 64 de chaque synthétiseur 60 de chaque unité fonctionnelle 50 peuvent être modifiés par l'intermédiaire d'une interface de contrôle 68, qui est par exemple une interface RS 232. L'unité d'évaluation 28 comporte également une mémoire de données 70 à partir de laquelle des données de consigne 72 peuvent être envoyées au synthétiseur 60. Les données de position 74 fournies par chacun des synthétiseurs 60 sont stockées dans la mémoire 70.

Dans chacune des unités fonctionnelles 50 un signal généré par le synthétiseur 60 associé est amplifié par un amplificateur 76 avant d'être envoyé par un interface de sortie 78 à la sortie de signal 28S1, 28S2, 28S3 ou 30S1, 30S2 associée.

Chacune des sorties de signal 28S1, 28S2, 28S3 de l'unité d'évaluation principale 28 est connectée à un dispositif contrôlé par un signal d'horloge (clock-pulse). Ainsi, la sortie de signal 28S1 génère un signal de codeur envoyé à un codeur 38. Ce codeur 38 reçoit par exemple 2048 impulsions par révolution. Un stroboscope 40 reçoit 512 impulsions par révolution. Un dispositif de contrôle de registre 42 reçoit également 2048 impulsions par révolution, mais a une tension inférieure à celle de l'encodeur redondant 38. L'unité d'évaluation principale 28 génère ainsi des signaux sur les sorties 28S1, 28S2, 28S3 qui donnent la référence des unités d'impression 4. Ces éléments ont ainsi accès à un signal qui est référencé uniquement sur la position des groupes imprimants.

L'unité d'évaluation auxiliaire 30 génère ainsi des signaux sur les sorties 30S1, 30S2 qui sont référencés sur la position d'au moins l'une des plieuses 16. La sortie 30S1 est reliée à un dispositif 44 d'application de colle sur le produit imprimé, tandis que la sortie 30S2 est reliée à un dispositif de contrôle de coupe 45. Ces applications reçoivent ainsi un signal qui est aligné sur la position des plieuses 16.

Grâce au nouveau concept d'utilisation de deux unités d'évaluation 28, 30 dont chacune traite un signal qui est référencé par rapport à une composante spécifique de la presse, à savoir unité d'impression ou plieuse, la distribution des signaux est facilitée. Aussi, la génération d'un signal de sortie n'influence pas la génération d'un autre signal de sortie, ce qui augmente la précision des signaux.

En variante, le signal d'entrée périodique auxiliaire peut être généré par un module situé dans l'unité 26, à partir du signal maître déphasé d'un angle de position réel entre les groupes imprimants et la ou les plieuses.

## Revendications

1. Ensemble pour presse rotative comprenant un dispositif de contrôle et /ou de commande d'une unité d'impression, un dispositif de contrôle et /ou de commande d'une plieuse et un dispositif de contrôle d'une presse rotative (2),
le dispositif de contrôle d'une presse rotative comprenant :
- un premier générateur de signal (34) adapté pour générer un premier signal périodique ayant une fréquence et une phase données,
- une unité d'évaluation principale (28) munie d'une entrée de signal principale (28E), adaptée pour recevoir un signal d'entrée périodique principal, d'au moins une première sortie de signal principale (28S1, 28S2, 28S3) et d'un premier dispositif de transformation principal (50) adapté pour générer un premier signal périodique de sortie sur la première sortie de signal principale (28S1, 28S2, 28S3) en fonction du signal d'entrée périodique principal, et
- un générateur maître (26) adapté pour générer un signal maître qui représente une grandeur de consigne telle que la position, l'incrément de position et/ou la vitesse, de la presse rotative (2),
- le premier générateur de signal étant une première interface (34) adaptée pour générer le premier signal périodique en fonction du signal maître, et étant adapté pour envoyer le premier signal périodique en tant que signal d'entrée principal à l'unité d'évaluation principale (28),
**caractérisé en ce que** l'unité d'évaluation principale (28) comporte un deuxième dispositif de transformation principal (50) adapté pour générer un deuxième signal périodique de sortie sur une deuxième sortie de signal principale (28S1, 28S2, 28S3) en fonction du signal d'entrée périodique principal, **en ce que** le deuxième dispositif de transformation principal (50) est adapté pour générer le deuxième signal périodique de sortie principal avec une résolution, et/ou une fréquence et/ou une relation de phase différente(s) de celle(s) du signal d'entrée périodique principal et avec une résolution et/ou une fréquence et/ou une relation de phase différente de celle du premier signal périodique de sortie, **en ce que** le dispositif de contrôle comprend une unité d'évaluation auxiliaire (30) munie d'une entrée de signal auxiliaire (30E), adaptée pour recevoir un signal d'entrée périodique auxiliaire, d'au moins une première sortie de signal auxiliaire (30S1, 30S2) et d'au moins un dispositif de transformation auxiliaire (50) adapté pour générer un premier signal périodique de sortie auxiliaire sur la première sortie de signal auxiliaire (30S1, 30S2) en fonction du signal périodique d'entrée auxiliaire, **en ce que** le dispositif de transformation auxiliaire (30) est adapté pour générer le premier signal périodique de sortie auxiliaire avec une résolution et/ou une fréquence et/ou une relation de phase différente(s) de celle(s) du signal périodique d'entrée auxiliaire, et **en ce que** la première sortie de signal principal (28S1, 28S2, 28S3) est reliée au dispositif de contrôle et /ou de commande d'une unité d'impression et la première sortie de signal auxiliaire (30S1, 30S2) est reliée au dispositif de contrôle et /ou de commande d'une plieuse.

2. Ensemble selon la revendication 1, **caractérisé en ce que** la première interface (34) est un encodeur virtuel adapté pour générer un premier signal d'encodeur en tant que premier signal périodique sur la base du signal maître.

3. Ensemble selon la revendication 1 ou 2, **caractérisé en ce que** le premier dispositif de transformation principal (50) est adapté pour générer le premier signal périodique de sortie avec une résolution, et/ou une fréquence et/ou une relation de phase différente(s) de celle(s) du signal d'entrée principal.

4. Ensemble selon l'une quelconque des revendications précédentes, **caractérisé en ce que** l'entrée de signal auxiliaire (30E) est adapté pour recevoir le premier signal périodique généré par le premier générateur de signal (34) en tant que signal d'entrée auxiliaire.

5. Ensemble selon l'une quelconque des revendications précédentes , **caractérisé en ce que** le dispositif de contrôle d'une presse rotative comporte un deuxième générateur de signal (36) adapté pour générer le signal d'entrée périodique auxiliaire en fonction du signal maître.

6. Ensemble selon la revendication 5, **caractérisé en ce que** le deuxième générateur de signal est une deuxième interface (36), notamment un deuxième encodeur virtuel adapté pour générer un deuxième signal d'encodeur en tant que signal d'entrée périodique auxiliaire.

7. Ensemble selon l'une quelconque des revendications précédentes, **caractérisé en ce qu'**au moins l'un des dispositifs de transformation (50) comprend une entrée de commande et est adapté pour modifier la résolution et/ou la fréquence et/ou la phase du signal de sortie associé en fonction d'un signal de commande entrant sur l'entrée de commande.

## Claims

1. Arrangement for a rotary press comprising a device for controlling and/or commanding a printing unit, a device for controlling and/or commanding a folding machine and a device for controlling a rotary press (2), the device for controlling a rotary press comprising:
- a first signal generator (34) arranged to generate a first periodic signal having a given frequency and phase,
- a main evaluation unit (28) provided with a main signal input (28E) arranged to receive a main periodic input signal, with at least one first main signal output (28S1, 28S2, 28S3) and with a first main conversion device (50) arranged to generate a first periodic output signal at the first main signal output (28S1, 28S2, 28S3) as a function of the main periodic input signal, and
- a master generator (26) arranged to generate a master signal which represents a value of a setpoint, such as the position, the position increment and/or the speed, of the rotary press (2),
- the first signal generator being a first interface (34) arranged to generate the first periodic signal as a function of the master signal, and being arranged to send the first periodic signal, as the main input signal, to the main evaluation unit (28),
**characterised in that** the main evaluation unit (28) includes a second main conversion device (50) arranged to generate a second periodic output signal at a second main signal output (28S1, 28S2, 28S3) as a function of the main periodic input signal, **in that** the second main conversion device (50) is arranged to generate the second main periodic output signal with a resolution and/or frequency and/or phase relation different from that/those of the main periodic input signal and with a resolution and/or frequency and/or phase relation different from that of the first periodic output signal, **in that** the control device comprises an auxiliary evaluation unit (30) provided with an auxiliary signal input (30E) arranged to receive an auxiliary periodic input signal, with at least one first auxiliary signal output (30S1, 30S2) and with at least one auxiliary conversion device (50) arranged to generate a first auxiliary periodic output signal at the first auxiliary signal output (30S1, 30S2) as a function of the auxiliary periodic input signal, **in that** the auxiliary conversion device (30) is arranged to generate the first auxiliary periodic output signal with a resolution and/or frequency and/or phase relation different from that/those of the auxiliary periodic input signal, and **in that** the first main signal output (28S1, 28S2, 28S3) is connected to the device for controlling and/or commanding a printing unit and the first auxiliary signal output (30S1, 30S2) is connected to the device for controlling and/or commanding a folding machine.

2. Arrangement according to claim 1, **characterised in that** the first interface (34) is a virtual encoder arranged to generate a first encoder signal as the first periodic signal on the basis of the master signal.

3. Arrangement according to claim 1 or 2, **characterised in that** the first main conversion device (50) is arranged to generate the first periodic output signal with a resolution and/or frequency and/or phase relation different from that/those of the main input signal.

4. Arrangement according to any one of the preceding claims, **characterised in that** the auxiliary signal input (30E) is arranged to receive the first periodic signal generated by the first signal generator (34) as the auxiliary input signal.

5. Arrangement according to any one of the preceding claims, **characterised in that** the device for controlling a rotary press includes a second signal generator (36) arranged to generate the auxiliary periodic input signal as a function of the master signal.

6. Arrangement according to claim 5, **characterised in that** the second signal generator is a second interface (36), especially a second virtual encoder arranged to generate a second encoder signal as the auxiliary periodic input signal.

7. Arrangement according to any one of the preceding claims, **characterised in that** at least one of the conversion devices (50) comprises a command input and is arranged to modify the resolution and/or frequency and/or phase of the associated output signal as a function of a command signal which is input at the command input.

## Patentansprüche

1. Anordnung für eine Rotationspresse, die folgendes aufweist:
eine Vorrichtung zum Steuern und/oder Ansteuern einer Druckeinheit, eine Vorrichtung zum Steuern und/oder Ansteuern einer Falzvorrichtung, und eine Steuervorrichtung für eine Rotationspresse (2), wobei die Steuervorrichtung für eine Rotationspresse folgendes aufweist:
- einen ersten Signalgenerator (34), der dazu ausgelegt ist, ein erstes periodisches Signal mit einer gegebenen Frequenz und einer gegebenen Phase zu erzeugen,
- eine Hauptauswertungseinheit (28), die versehen ist mit einem Haupt-Signaleingang (28E), der dazu ausgelegt ist, ein periodisches Haupteingangssignal zu empfangen, mit mindestens einem ersten Hauptsignalausgang (28S1, 28S2, 28S3), und mit einer ersten HauptWandlervorrichtung (50), die dazu ausgelegt ist, ein erstes periodisches Ausgangssignal an dem ersten Hauptsignalausgang (28S1, 28S2, 28S3) in Abhängigkeit von dem periodischen Haupteingangssignal zu erzeugen, und
- einen Master-Generator (26), der dazu ausgelegt ist, ein Mastersignal zu erzeugen, das eine Vorgabegröße, wie etwa die Position, das Positionsinkrement und/oder die Geschwindigkeit der Rotationspresse (2) repräsentiert,
- wobei der erste Signalgenerator eine erste Schnittstelle (34) ist, die dazu ausgelegt ist, das erste periodische Signal in Abhängigkeit von dem Master-Signal zu erzeugen, und dazu ausgelegt ist, das erste periodische Signal als Haupteingangssignal an die Hauptauswertungseinheit (28) zu senden,
**dadurch gekennzeichnet,**
**dass** die Hauptauswertungseinheit (28) eine zweite Hauptwandlervorrichtung (50) aufweist, die dazu ausgelegt ist, ein zweites periodisches Ausgangssignal an einem zweiten Hauptsignalausgang (28S1, 28S2, 28S3) in Abhängigkeit von dem periodischen Haupteingangssignal zu erzeugen,
**dass** die zweite Hauptwandlervorrichtung (50) dazu ausgelegt ist, das zweite periodische Hauptausgangssignal mit einer Auflösung und/oder einer Frequenz und/oder einer Phasenlage zu erzeugen, die von derjenigen (denjenigen) des periodischen Haupteingangssignals verschieden ist (sind),
und mit einer Auflösung und/oder einer Frequenz und/oder einer Phasenlage,
die von derjenigen des ersten periodischen Ausgangssignals verschieden ist,
**dass** die Steuervorrichtung eine Hilfsauswertungseinheit (30) aufweist, die versehen ist mit einem Hilfssignaleingang (30E), der dazu ausgelegt ist, ein periodisches Hilfseingangssignal zu empfangen, mit mindestens einem ersten Hilfssignalausgang (30S1, 30S2), und mit mindestens einer Hilfswandlervorrichtung (50), die dazu ausgelegt ist, ein erstes periodisches Hilfsausgangssignal an dem ersten Hilfssignalausgang (30S1, 30S2) in Abhängigkeit von dem periodischen Hilfseingangssignal zu erzeugen,
**dass** die Hilfswandlervorrichtung (30) dazu ausgelegt ist, das erste periodische Hilfsausgangssignal mit einer Auflösung und/oder einer Frequenz und/oder einer Phasenlage zu erzeugen, die von derjenigen (denjenigen) des periodischen Hilfseingangssignals verschieden ist (sind),
und **dass** der erste Hauptsignalausgang (28S1, 28S2, 28S3) mit der Vorrichtung zum Steuern und/oder Ansteuern einer Druckeinheit verbunden ist, und der erste Hilfssignalausgang (30S1, 30S2) mit der Vorrichtung zum Steuern und/oder Ansteuern einer Falzvorrichtung verbunden ist.

2. Anordnung nach Anspruch 1,
**dadurch gekennzeichnet,**
**dass** die erste Schnittstelle (34) ein virtueller Codierer ist, der dazu ausgelegt ist, ein erstes Codiersignal als erstes periodisches Signal auf der Grundlage des Mastersignals zu erzeugen.

3. Anordnung nach Anspruch 1 oder 2,
**dadurch gekennzeichnet,**
**dass** die erste Hauptwandlervorrichtung (50) dazu ausgelegt ist, das erste periodische Ausgangssignal mit einer Auflösung und/oder einer Frequenz und/oder einer Phasenlage zu erzeugen, die von derjenigen (denjenigen) des Haupteingangssignals verschieden ist (sind).

4. Anordnung nach einem der vorherigen Ansprüche,
**dadurch gekennzeichnet,**
**dass** der Hilfssignaleingang (30E) dazu ausgelegt ist, das von dem erstem Signalgenerator (34) erzeugte erste periodische Signal als Hilfseingangssignal zu empfangen.

5. Anordnung nach einem der vorherigen Ansprüche,
**dadurch gekennzeichnet,**
**dass** die Vorrichtung zum Steuern einer Rotationspresse einen zweiten Signalgenerator (36) aufweist, der dazu ausgelegt ist, das periodische Hilfseingangssignal in Abhängigkeit von dem Mastersignal zu erzeugen.

6. Anordnung nach Anspruch 5,
**dadurch gekennzeichnet,**
**dass** der zweite Signalgenerator eine zweite Schnittstelle (36) ist, insbesondere ein zweiter virtueller Codierer, der dazu ausgelegt ist, ein zweites Codiersignal als periodisches Hilfseingangssignal zu erzeugen.

7. Anordnung nach einem der vorherigen Ansprüche,
**dadurch gekennzeichnet,**
**dass** zumindest eine der Wandlervorrichtungen (50) einen Steuereingang aufweist und dazu ausgelegt ist, die Auflösung und/oder die Frequenz und/oder die Phase des zugeordneten Ausgangssignals in Abhängigkeit von einem auf dem Steuereingang eintreffenden Ansteuersignal zu modifizieren.
